# EUROPEAN PATENT APPLICATION

(11) **EP 2 775 729 A1**
(43) Date of publication of application: **10.09.2014**
(21) Application number: 13164616.8
(22) Date of filing: 22.04.2013
(51) Int. Cl.: H04N 21/436, H04N 21/41, H04N 21/422

(54) **Environment control device and video/audio player**

(30) Priority: 04.03.2013 TW 102203936
(71) Applicant: Gunitech Corp., Hsinchu County 307 (TW)
(72) Inventor: Hung, Chien-Ju, Hsinchu County 307 (TW); Shiu, Huan-Ruei, Hsinchu County 307 (TW); Zhao, Enoch, Hsinchu County 307 (TW); Chou, Po-Kuei, Hsinchu County 307 (TW)
(74) Representative: Altenburg, Bernardus Stephanus Franciscus

(57) **Abstract**

An environment control device (1) and a video/audio player (2) are disclosed, wherein the environment control device (1) is electrically connected to a video/audio player (2) and controls at least one environment providing device (4). The environment control device (1) has a processor (10), a connector (20), and a wireless communication module (30). The connector (20) connects to video/audio player (2) and electrically connects to the processor (10) for receiving a situation signal (2a) transmitted from the video/audio player (2). The wireless communication module (30) electrically connects to the processor (10) for outputting an environment control signal (1a) to the at least one environment providing device (4), wherein the environment control signal (1a) is determined according to the situation signal (2a).

## Description

### BACKGROUND OF THE INVENTION

### 1. Field of the Invention

The present invention relates to an environment control device and a video/audio player.

### 2. Description of the Related Art

Video/audio players such as TVs, computers, projectors, displays, or audio systems are generally operated without interacting with environment providing devices such as illuminating lamps, speakers, or air conditioning systems. For example, when a user watches a program on TV or gives a presentation with a projector and the ambient light illumination is too strong, the procedure of switching-off the ambient light illumination or closing curtains for lowering the brightness of the ambient light illumination has to be accomplished manually. Furthermore, if the indoor temperature is too warm or too cold while the user is watching a program or a presentation, the user's attention may be distracted such that the user cannot concentrate on the program or presentation.

Therefore, there is a need to provide an environment control device and a video/audio player for manipulating the operating state of at least one environment providing device according to the current conditions of the video/audio player. For instance, the ambient light illumination can be switched off or the temperature of an air conditioning system can be adjusted automatically according to the current conditions; thus, the user's operating procedure can simplified and the visual, tactile, auditory, or smell senses of the user can also be stimulated.

### SUMMARY OF THE INVENTION

It is an object of the present invention to provide an environment control device.

It is another object of the present invention to provide a video/audio player with a built-in environment control device.

In order to achieve the above objects, the environment control device of the present invention can be electrically connected to a video/audio player and employed for controlling at least one environment providing device. The environment control device of the present invention comprises a processor, a connector, and a wireless communication module, wherein the connector is electrically connected to the processor and to the video/audio player for receiving a situation signal transmitted by the video/audio player. The wireless communication module is electrically connected to the processor for outputting an environment control signal to the at least one environment providing device, wherein the environment control signal is determined according to the situation signal.

According to one embodiment of the present invention, the environment control device further comprises a memory for storing a program or at least one control parameter.

According to one embodiment of the present invention, the environment control device further comprises a receiver for receiving a video/audio/light output from the video/audio player.

According to one embodiment of the present invention, the program analyzes the situation signal or the video/audio/light output for determining the environment control signal.

The present invention further provides a video/audio player with the abovementioned environment control device.

### BRIEF DESCRIPTION OF THE DRAWINGS

The exemplary embodiment of the present invention will be understood more fully from the detailed description given below and from the accompanying drawings of the invention, which, however, should not be taken to limit the invention to the specific embodiment, but are for explanation and understanding only.
FIG. 1 is a schematic drawing of the environment according to one embodiment of the environment control device of the present invention.
FIG. 2 illustrates the hardware structure of the environment control device of the present invention.
FIG. 3 illustrates the hardware structure of the video/audio player of one embodiment of the present invention.
FIG. 4 is a schematic drawing of the environment according to another embodiment of the environment control device of the present invention.

### DETAILED DESCRIPTION OF THE PREFERRED EMBODIMENT

To facilitate understanding and to clarify the object, characteristics and advantages of the present invention, the following specific embodiments and figures illustrating the present invention are presented to provide a detailed description.

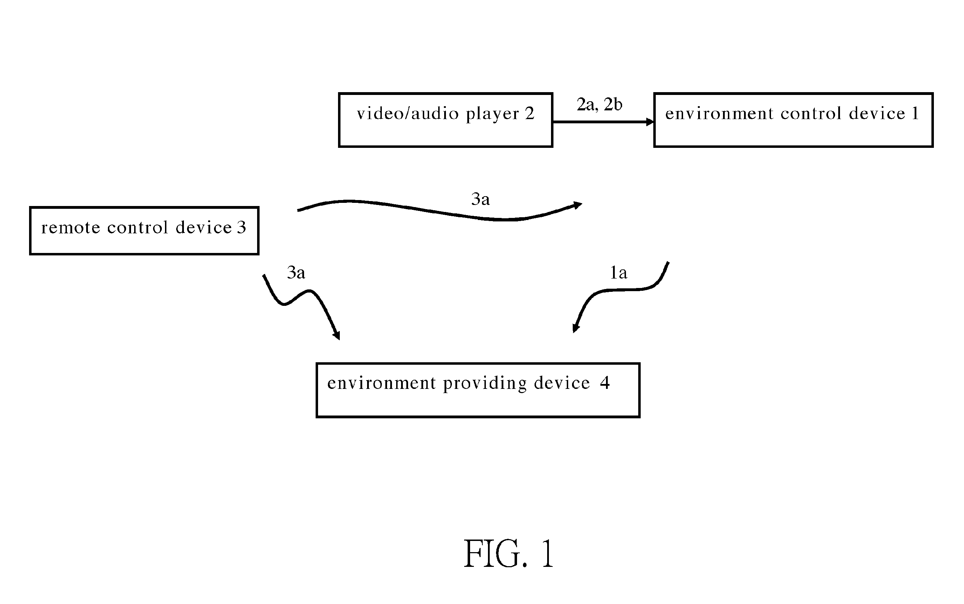

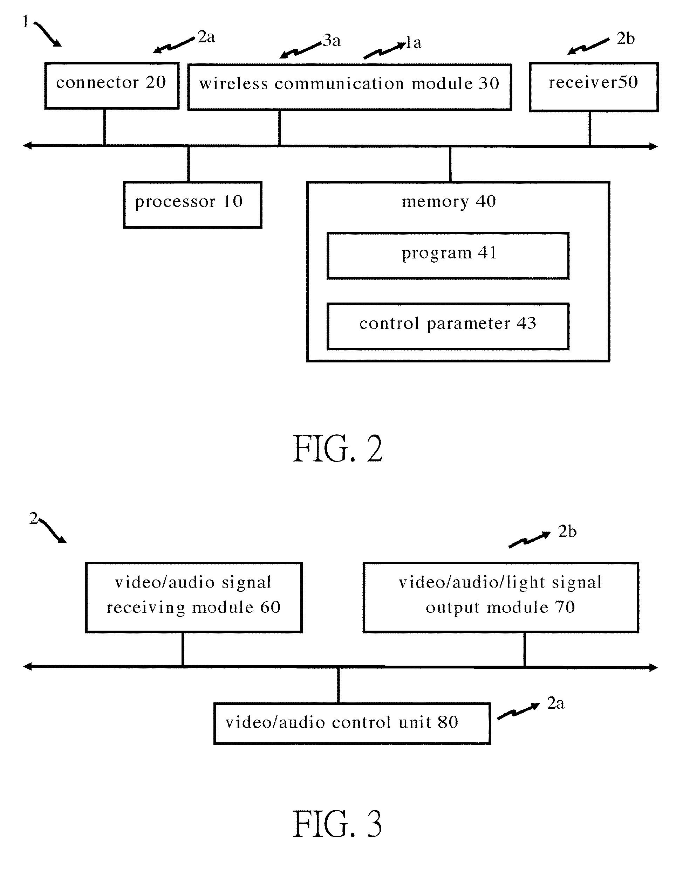

Please refer to FIG. 1 to FIG. 3, which relate to one embodiment of the environment control device, wherein FIG. 1 is a schematic drawing of the environment according to one embodiment of the environment control device of the present invention; FIG. 2 illustrates the hardware structure of the environment control device of the present invention; FIG. 3 illustrates the hardware structure of the video/audio player of one embodiment of the present invention.

As shown in FIG. 1, the environment control device 1 is electrically connected to a video/audio player 2 and used for controlling at least one environment providing device 4. In one embodiment of the present invention, the environment control device 1 is a dongle with a USB port and the video/audio player 2 is a device capable of playing video/audio programs such as a TV, a computer, a projector, a display, or an audio system. In this embodiment, the video/audio player 2 refers to a device capable of playing images, sounds, or images and sounds together. The environment providing device 4 is a device which is capable of stimulating the visual, tactile, auditory, or smell senses of humans such as an illuminating lamp, a speaker, an air conditioning system, a steam generator, a scent generator, or an electric fan. Meanwhile, as shown in FIG. 1, both the environment control device 1 and the environment providing device 4 can receive a remote control signal 3a transmitted from a remote control device 3. The remote control device 3 can be a mobile device such as a remote control, a mobile phone, or a tablet PC.

Please refer to FIG. 1 and FIG. 2; the environment control device 1 in this embodiment comprises a processor 10, a connector 20, a wireless communication module 30, a memory 40, and a receiver 50, wherein the environment control device 1 of the present invention connects to the video/audio player 2 via the connector 20, which is the USB port of the dongle, for receiving a situation signal 2a or a video/audio/light output 2b transmitted from the video/audio player 2. The situation signal 2a refers to a command in the form of an electronic signal transmitted from the video/audio player 2. For example, the situation signal 2a can be a signal for turning on the projector or the TV, or a signal with a code indicating an exciting scene. For instance, a TV signal carries a code indicating that the current scene is exciting; therefore, the TV signal can transmit a signal code indicating the exciting scene. The video/audio/light output 2b is the image, sounds, or light outputted from the video/audio player 2, and the receiver 50 of the environment control device 1 receives the video/audio/light output 2b.

The applicable transmission interfaces for the connector 20 of the present invention are USB (Universal Serial Bus), General Purpose I/O Port, JTAG Port (Joint Test Action Group Port), LPT Port, and COM Port.

The wireless communication module 30 can be a wireless network, Bluetooth, Infrared Ray, LTE (Long Term Evolution), RF module, 3G, or 4G. Furthermore, the control parameter 43 is adapted to change the brightness of the light or the color of the light; to cause the illuminating lamp to flicker; to switch-on/off the illuminating lamp; to change the volume of at least one speaker; or to control the temperature or fan speed of the air conditioning system. In general, the technique applied for transmitting signals among the environment control device 1, the remote control device 3, and the environment providing device 4 is wireless transmission; therefore, both the remote control device 3 and the environment providing device 4 must be equipped with a wireless transmission module.

An environment control signal 1a is determined by the environment control device 1 according to the situation signal 2a and is then outputted to the at least one environment providing device 4. The memory 40 stores several control parameters for manipulating the brightness or color of the illuminating lamp, causing the illuminating lamp to flicker, switching on/off the illuminating lamp, raising/lowering the volume of speakers, adjusting the temperature or fan speed of the air conditioning system, and the like. Hence, the environment control device 1 can select a suitable environment control signal 1a according to the situation signal 2a.

Moreover, if the environment control device 1 is equipped with a receiver 50 for receiving the video/audio/light output 2b, the environment control signal 1a can also be determined and outputted to at least one environment providing device 4 according to vi-video/audio/light output 2b. The processor 10 implements a program 41 stored in the memory 40 to analyze the complex video/audio/light output 2b and then to determine the environment control signal 1a. Next, the environment control signal 1a is outputted to the at least one environment providing device 4 via the wireless communication module 30, which is electrically connected to the processor 10, to manipulate the at least one environment providing device 4. It is noted that the environment control signal 1a can also be determined according to the at least one control parameter 43 stored in the memory 40 after the video/audio/light output 2b is analyzed by the program 41. Furthermore, the wireless communication module 30 of the environment control device 1 also can receive a remote control signal 3a transmitted from the remote control device 3. The remote control signal 3a can change parameter settings or can cause the environment control device 1 to output the environment control signal 1a. In addition, the program 41 can be presented in a software form or a firmware form.

As shown in FIG. 3, the video/audio player 2 comprises a video/audio signal receiving module 60, a video/audio/light signal outputting module 70, and a video/audio control unit 80, wherein the video/audio/light signal outputting module 70 and the video/audio signal receiving module 60 are electrically connected to the video/audio control unit 80. The video/audio control unit 80 generates a situation signal 2a to the connector 20 of the environment control device 1. The receiver 50 of the environment control device 1 receives a video/audio/light output 2b outputted by the video/audio/light signal outputting module 70. It is noted that the video/audio/light signal outputting module 70 of the video/audio player 2 is a device for outputting video/audio/light signals. For example, the video/audio/light signal outputting module 70 can be a display screen, a projector, a speaker apparatus, and the like. The video/audio signal receiving module 60 can be a display screen, a projector, or a speaker apparatus with a built-in receiving module for receiving video/audio signals.

For instance, assuming that the video/audio player 2 is a TV, then the environment providing device 4 is an illuminating lamp, and the environment control device 1 is electrically connected to the video/audio player 2 (TV) via the connector 20 for allowing the video/audio player 2 to transmit the situation signal 2a or the video/audio/light output 2b to the environment control device 1 there through.

When the video/audio player 2 (TV) is playing an exciting film, the program 41 analyzes the audio frequency and the images of the video/audio/light output 2b to define that the video/audio player 2 is playing exciting content. Therefore, the program 41 sets the environment control signal 1a as a control command to cause the illuminating lamp (the environment providing device 4) to flicker. The control command (the environment control signal 1a) is transmitted to the environment providing device 4 (in this embodiment, the illuminating lamp) via the wireless communication module 30, and then the environment providing device 4 (the illuminating lamp) flickers accordingly. Thus, the entertainment factor is enhanced while users are watching films. Moreover, commands for manipulating the illuminating lamp (the environment providing device 4) to change the brightness or the color of the illuminating lamp, to cause the illuminating lamp to flicker, or to switch on/off the illuminating lamp can also be determined by the program 41 through the control parameter 43. In another embodiment, for example, a TV signal bandwidth carries a code which indicates the broadcasting content is exciting and allows TV signals to transmit a situation signal 2a, which indicates the exciting content, to the environment control device 1. Then the environment control device 1 transmits the environment control signal 1a to the environment providing device 4, e.g., to cause the illuminating lamp to flicker.

It is noted that the environment control device 1 can control a single or a plurality of environment providing devices 4 at the same time. For instance, when the video/audio player 2 is playing exciting content and the environmental temperature is too warm, the environment control device 1 outputs not only the environment control signal 1a for causing the illuminating lamp to flicker but also the environment control signal 1a for lowering the environmental temperature. Therefore, the user can enjoy the film comfortably. In addition to employing the environment control device 1 to control a single or a plurality of environment providing devices 4, the user can also use the remote control device 3 to transmit a remote control signal 3a to the wireless communication module 30 for controlling the environment control device 1. Moreover, the user can use the remote control device 3 to transmit the remote control signal 3a directly to the environment providing device 4 for changing various settings of the environment providing device 4 to increase the suitability of the present invention while the user is watching the content played on the video/audio player 2.

Another application of the present invention is that if the video/audio player 2 is a projector and if the projector is being switched-on, the projector generates the situation signal 2a, which indicates that the projector is being turned on, to the environment control device 1. The environment control signal 1a, which is a command for switching off the illuminating lamp, is transmitted to the environment providing device 4 (the illuminating lamp) from the environment control device 1, and then the illuminating lamp is switched off accordingly.

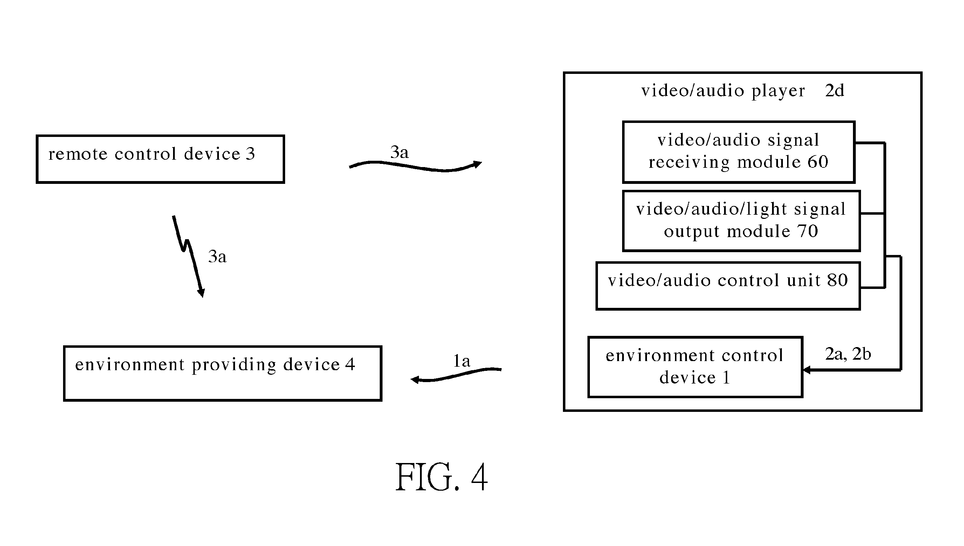

Please refer to FIG. 4, wherein FIG. 4 is a schematic drawing of the environment according to another embodiment of the environment control device of the present invention.

As shown in FIG. 4, the difference between the video/audio player 2d of the present embodiment and the video/audio player 2 of the previous embodiment is that the video/audio player 2d has a built-in environment control device 1 for allowing the video/audio player 2d to directly control the at least one environment providing device 4. Furthermore, as shown in FIG. 4, both the video/audio player 2d and the environment providing device 4 can receive the remote control signal 3a transmitted from the remote control device 3; thus the applicability of the present invention is increased. It is noted that the details of how the video/audio player 2d of the present invention controls the environment providing device 4 through the environment control device 1 are same as in the previous embodiment; therefore, detailed description is omitted.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the structure of the present invention without departing from the scope or spirit of the invention.

## Claims

1. An environment control device (1) electrically connected to a video/audio player (2) for controlling at least one environment providing device (4), the environment control device (1) comprising:
a processor (10);
a connector (20) electrically connected to the processor (10) and connected to the video/audio player (2) for receiving a situation signal (2a) transmitted from the video/audio player (2); and
a wireless communication module (30) electrically connected to the processor (10) for outputting an environment control signal (1a) to the at least one environment providing device (4), wherein the environment control signal (1a) is determined according to the situation signal (2a).

2. The environment control device (1) as claimed in claim 1, wherein the environment control device (1) further comprises a memory (40) for storing a program (41) or at least one control parameter (43).

3. The environment control device (1) as claimed in claim 2, wherein the at least one control parameter (43) is adapted to change a brightness or a color of an illuminating lamp, to cause an illuminating lamp to flicker, to switch on/off the illuminating lamp, to adjust a volume of a speaker, or to control a temperature or fan speed of the air conditioning system.

4. The environment control device (1) as claimed in claim 2 or 3, wherein the environment control device (1) further comprises a receiver (50) for receiving a video/audio/light output (2b) outputted from the video/audio player (2).

5. The environment control device (1) as claimed in any of the claims 2, 3 or 4, wherein the wireless communication module (30) receives a remote control signal (3a) transmitted from a remote control device (3).

6. The environment control device (1) as claimed in any of claims 2 to 5, wherein the program (41) analyzes the situation signal (2a) or the video/audio/light output (2b) for determining the environment control signal (1a).

7. A video/audio player (2d) for controlling at least one environment providing device (1) comprising a video/audio signal receiving module (60), a video/audio/light signal outputting module (70), and a video/audio control unit (80), wherein the video/audio/light signal outputting module (70) and the video/audio signal receiving module (60) are electrically connected to the video/audio control unit (80), **characterized in that** the video/audio control unit (80) generates a situation signal (2a) and the video/audio player (2d) further comprises an environment control device (1), wherein the environment control device (1) comprises:
a processor (10);
a wireless communication module (30) electrically connected to the processor (10) for outputting an environment control signal (1a) to the at least one environment providing device (4), wherein the environment control signal (1a) is determined according to the situation signal (2a).

8. The video/audio player (2d) as claimed in claim 7, wherein the environment control device (1) further comprises a memory (40) for storing a program (41) or at least one control parameter (43).

9. The video/audio player (2d) as claimed in claim 8, wherein the at least one control parameter (43) is adapted to change a brightness or a color of an illuminating lamp, to cause an illuminating lamp to flicker, to switch on/off an illuminating lamp, to adjust a volume of a speaker, or to control a temperature or a fan speed of an air conditioning system.

10. The video/audio player (2d) as claimed in claim 8 or 9, wherein the environment control device (1) further comprises a receiver (50) for receiving a video/audio/light output (2b) outputted from the video/audio/light signal outputting module (70).

11. The video/audio player (2d) as claimed in any of the claims 8, 9 or 10 wherein the wireless communication module (30) receives a remote control signal (3a) transmitted from a remote control device (3).

12. The video/audio player (2d) as claimed in any of claims 8 to 11, wherein the program analyzes the situation signal (2a) or the video/audio/light output (2b) and then determines the environment control signal (1a).
